# EUROPEAN PATENT APPLICATION

(11) **EP 1 482 679 A1**
(43) Date of publication of application: **01.12.2004**
(21) Application number: 02701698.9
(22) Date of filing: 04.03.2002
(51) Int. Cl.: H04L 12/56

(54) **MULTIPLEXING DEVICE**

(71) Applicant: MITSUBISHI DENKI KABUSHIKI KAISHA, Tokyo 100-8310 (JP)
(72) Inventor: HORIE, Nobuyoshi, Mitsubishi Denki K. K., Chiyoda-ku, Tokyo 100-8310 (JP)
(74) Representative: Popp, Eugen, Dr.
(86) International application number: PCT/JP2002/001960
(87) International publication number: WO 2003/075525

(57) **Abstract**

A multiplex transmission apparatus according to the present invention compresses and multiplexes transmission signals, such as a voice signal, a facsimile signal and a data modem signal, then transmits them, wherein a signal input from an exchange side is subjected to compression encoding and facsimile demodulation in a plurality of signal process channels in a signal processing section, and thereafter each of the signal process channels generates and transmits a channel check signal to an opposing multiplex transmission apparatus side, which detects the channel check signal and returns a response signal, whereby abnormality in a signal process channel can be detected.

## Description

### Technical Field

The present invention relates to a multiplex transmission apparatus which compresses and multiplexes transmission signals, such as a voice signal, a facsimile signal and a data modem signal, so as to transmit them.

### Background Art

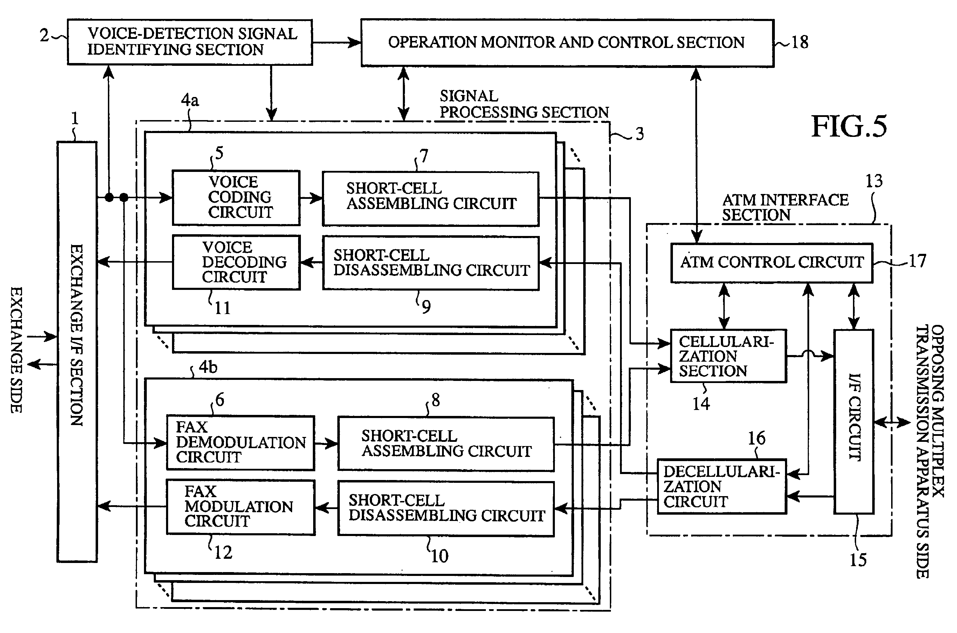

Fig. 5 shows an example of the structure of a conventional multiplex transmission apparatus. In Fig. 5, reference numeral "1" denotes an exchange interface section (referred to as "exchange I/F section" in Fig. 5) to which voice signals, facsimile signals and data modem signals of plural channels are input from the exchange side and which disassembles those signals channel by channel. Reference numeral "2" denotes a voice-detection signal identifying section which makes a voice presence/absence decision on a voice signal and identifies whether the signal is a voice signal, a facsimile signal or a data modem signal (voice band signal), for each channel disassembled by the exchange interface section 1. Reference numeral "3" denotes a signal processing section to which a signal of each channel disassembled by the exchange interface section 1 is input and which performs signal processing corresponding to the type of that signal. This signal processing section 3 performs compression encoding when an input signal is a voice signal, performs a demodulation process when it is a facsimile signal, and performs compression encoding when it is a data modem signal. In the signal processing section 3, reference numerals "4a" and "4b" denote plural signal process channels which perform signal processing on signals of individual channels input from the exchange interface section 1, and there are a voice signal processing system which performs compression encoding when the input signal is a voice signal and a facsimile signal processing system which performs a demodulation process when the input signal is a facsimile signal, which are respectively denoted by "4a" and "4b" in Fig. 5. Reference numeral "5" denotes a voice encoding circuit which performs compression encoding on a voice signal by a high-efficient voice codec (e.g., CS-ACELP codec according to the ITU-T Recommendation G. 729), and reference numeral "6" denotes a facsimile demodulation circuit (referred to as "FAX modulation circuit" in Fig. 5) which demodulates a facsimile signal. A data modem signal is compression-encoded by a data modem transmission voice codec (e.g., ADPCM voice codec according to the ITU-T Recommendation G. 726), but this encoding circuit is of the same type as the voice encoding circuit 5 and its illustration is thus omitted. In the signal processing section 3, reference numeral "7" denotes a short-cell assembling circuit which performs cell assembly of a voice signal, encoded by the voice encoding circuit 5, into short cells of asynchronous transmission, and reference numeral "8" denotes a short-cell assembling circuit which performs cell assembly of a facsimile signal, encoded by the facsimile demodulation circuit 6, into short cells of asynchronous transmission. Reference numeral "9" denotes a short-cell disassembling circuit which disassembles the short cells within asynchronous transmission data transmitted from an opposing multiplex transmission apparatus side in which a voice signal is stored. Reference numeral "10" denotes a short-cell disassembling circuit which disassembles the short cells in which a facsimile signal, within asynchronous transmission data transmitted from an opposing multiplex transmission apparatus side, is stored. Reference numeral "11" denotes a voice decoding circuit which decodes a voice signal undergone cell disassembly by the short-cell disassembling circuit 9, and reference numeral "12" denotes a facsimile modulation circuit (referred to as "FAX modulation circuit" in Fig. 5) which modulates a facsimile signal undergone cell disassembly by the short-cell disassembling circuit 10. Reference numeral "13" denotes an ATM interface section (ATM means asynchronous transmission) which stores a short cell signal from the signal processing section 3 into a cell of asynchronous transmission, multiplexes the thus generated plural cells and transmits them to the opposing multiplex transmission apparatus side in asynchronous transmission, and also demultiplexes transmission signals from the opposing multiplex transmission apparatus side for decellularizing (meaning to disassemble ATM cells). In the ATM interface section 13, reference numeral "14" denotes a cellularization section, which means to assemble ATM cells, and which stores short cells from the short-cell assembling circuits 7 and 8 into cells of asynchronous transmission. Here, a cell of asynchronous transmission is generally composed of a header portion and a payload portion, and a plurality of short cells are stored in the payload portion. Reference numeral "15" denotes an interface circuit which multiplexes cells of asynchronous transmission generated by the cellularization section 14 and transmits them to the opposing multiplex transmission apparatus side and demultiplexes a transmission signal from the opposing multiplex transmission apparatus side, and reference numeral "16" denotes a decellularization circuit which performs a decellularization process to disassemble a transmission signal from the opposing multiplex transmission apparatus side into short cells. Reference numeral "17" denotes an asynchronous transmission control circuit (referred to as "ATM control circuit" in Fig. 5) which collects statistic information on the number of short cells generated in a given time, the number of cells of asynchronous transmission and so on, and outputs those statistic information to an operation monitor and control section 18. The operation monitor and control section 18 monitors the operations of the individual sections of the apparatus, in other words, sets the operational mode and monitors abnormality in the individual sections (operational abnormality or the like), and inputs and/or outputs data on those setting and monitoring with a control console which is operated by an operator.

The operation of the conventional multiplex transmission apparatus will be described next. A 2.048 MHz signal (E1 signal) or 1.544 MHz signal (T1 signal) which conforms to, for example, ITU-T Recommendation G 703 or G 704, is input to the exchange interface section 1 from an exchange side. Each signal has voice signals, facsimile signals and data modem signals multiplexed by a plurality of channels, and the exchange interface section 1 disassembles the signal per each channel and outputs the thus demultiplexed signal to the voice-detection signal identifying section 2 and the signal processing section 3. The voice-detection signal identifying section 2 makes a voice presence/absence decision on a voice signal and identifies whether the signal is a voice signal, a facsimile signal or a data modem signal (voice band signal) for each channel, and outputs the signal to the signal processing section 3. The signal processing section 3 performs compression encoding when the input signal is a voice signal, performs a demodulation process when it is a facsimile signal, and performs compression encoding when it is a data modem signal. This signal processing is carried out by the signal process channels 4a and 4b in the signal processing section 3. The signal of each channel disassembled in the exchange interface section 1 is input to either the signal process channel 4a or 4b. At this time, the signal is input to the voice signal processing system 4a when the signal is a voice signal, and the signal is input to the facsimile signal processing system 4b when the signal is a facsimile signal. Based on the result of the voice presence/sound absence decision from the voice-detection signal identifying section 2, the voice encoding circuit 5 in the signal process channel 4a performs compression encoding on a voice-present portion of a voice signal by a high-efficient voice codec and assembles the compression-encoded signal into a short cell by the short-cell assembling circuit 7. The facsimile demodulation circuit 6 in the signal process channel 4b performs facsimile demodulation on the input signal from the exchange interface section 1 and assembles the demodulated signal into a short cell by the short-cell assembling circuit 8. The short cell assembled by the short-cell assembling circuit is input to the ATM interface section 13 and is stored in a cell of asynchronous transmission by the cellularization section 14. The interface circuit 15 multiplexes a plurality of cells generated by the cellularization section 14 and transmits the cells to the opposing multiplex transmission apparatus side in asynchronous transmission.

As the conventional multiplex transmission apparatus compresses and multiplexes a voice signal, a facsimile signal and a data modem signal input from the exchange side and transmits the signal to the opposing multiplex transmission apparatus side, it can transmit signals efficiently. The transmission efficiency becomes the maximum when a plurality of channels input to the exchange interface section are all voice signals. In this case, if the voice presence ratio of the voice signal is 40% and the compression rate of CS-ACELP is eight times, for example, 20 times multiplexing is possible in voice present transmission, so that the transmission path to the opposing multiplex transmission apparatus can be made to one channel with respect to 20 channels as the number of changes of the signal input from the exchange side, thus ensuring efficient transmission.

In this conventional multiplex transmission apparatus, however, even in a case where an operational abnormality (for example, disconnection or short-circuiting of a signal line or failure in the circuit elements) has occurred inside the signal processing section 3 and its peripheral line, it was unclear in which portion of that circuit the operational abnormality has occurred. For example, in a case where an operational abnormality occurred in a specific signal process channel within the signal process channel 4a or 4b of the signal processing section 3, the conventional multiplex transmission apparatus could not specify this as an abnormality location. Due to this fact, it was not possible for the conventional apparatus to take such a measure as not using the specific signal process channel, which resulted in a poorer operational efficiency, because of halting of the entire transmission function, inability to perform signal transmission due to the reuse of the specific signal process channel under the operational abnormality and so on.

### Disclosure of Invention

The invention has been made to overcome the above-described problem and an object of the present invention is to provide a multiplex transmission apparatus which detects abnormality in each signal process channel in a signal processing section to ensure more efficient transmission.

To achieve the object, a multiplex transmission method according to the present invention enables to generate a channel check signal in a signal process channel and provide the thus generated channel check signal in a cell of asynchronous transmission so as to transmit the channel check signal to an opposing multiplex transmission apparatus side. By this method, it is made possible to detect whether an abnormality has occurred in the signal process channel in the opposing multiplex transmission apparatus side which has received the channel check signal. Further, the opposing multiplex transmission apparatus side may be structured in such a way that when it has not received the channel check signal, a channel check abnormal signal is transmitted to the multiplex transmission apparatus which has generated the channel check signal. By this structure, it is made possible to detect whether an abnormality has occurred in the signal process channel within the multiplex transmission apparatus which has generated the channel check signal.

A multiplex transmission apparatus according to the invention has a channel-check signal generating circuit, which generates a channel check signal in a signal process channel within a signal processing section, and can detect if abnormality has occurred in the signal process channel by detecting the channel check signal generated by the channel-check signal generating circuit. Further, the channel-check signal generating circuit may be so constructed as to generate a channel check signal as one of short cells in asynchronous transmission. By this structure, the channel check signal can be multiplexed together with other transmission signals, so as to be transmitted to an opposing multiplex transmission apparatus side. The channel check signal which is generated by the channel-check signal generating circuit may be comprised of a code representing it as a channel check signal and a code of the signal process channel to which the channel-check signal generating circuit belongs. This structure enables to distinguish the channel check signal from other transmission signals and also specify the signal process channel where abnormality has occurred by the code of the signal process channel.

A multiplex transmission apparatus according to the invention includes: an ATM interface section which receives a channel check signal transmitted from an opposing multiplex transmission apparatus side in an asynchronous transfer mode, a channel-check signal detecting circuit which detects the channel check signal received by this ATM interface section, and a channel check processing circuit which generates a channel check response signal based on acknowledgement of reception of the channel check signal from this channel-check signal detecting circuit, wherein the channel check response signal generated by the channel check processing circuit is transmitted to the opposing multiplex transmission apparatus side from the ATM interface section in the asynchronous transfer mode. This structure enables to detect the channel check signal and transmit a response signal to the channel check signal to the opposing multiplex transmission apparatus side.

### Brief Description of Drawings

Fig. 1 is a block diagram showing the structure of a multiplex transmission apparatus according to a first embodiment of the invention.
Fig. 2 is an exemplary diagram for explaining the structure of a channel check signal and a channel check response signal which are used in the multiplex transmission apparatus according to the first embodiment of the invention.
Fig. 3 is another exemplary diagram for explaining the structure of a channel check signal and a channel check response signal which are used in the multiplex transmission apparatus according to the first embodiment of the invention.
Fig. 4 is a flowchart illustrating process contents of the channel check signal in the multiplex transmission apparatus according to the first embodiment of the invention.
Fig. 5 is a block diagram showing an example of a conventional multiplex transmission apparatus.

### Best Mode for Carrying Out the Invention

### (First Embodiment)

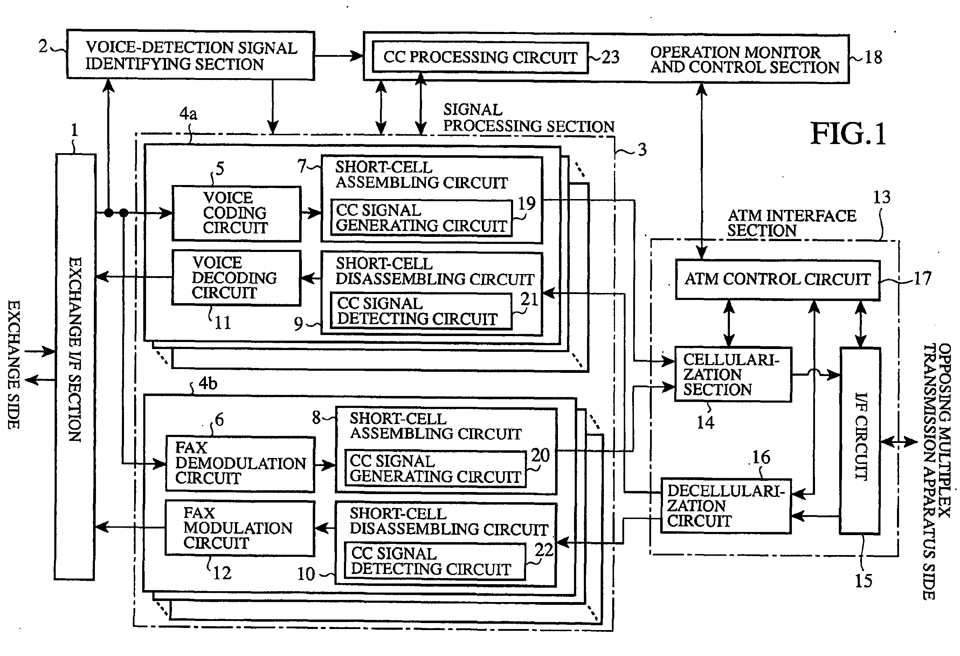

Fig. 1 is a block diagram showing the structure of a multiplex transmission apparatus according to a first embodiment of the invention. In Fig. 1, reference numerals "19" and "20" denote channel-check signal generating circuits (referred to as "CC signal generating circuit" in Fig. 1) which generate a channel check signal. The channel-check signal generating circuit 19 is provided in each of signal process channels 4a which is a voice signal processing system, and the channel-check signal generating circuit 20 is provided in each of signal process channels 4b which is a facsimile signal processing system. Reference numerals "21" and "22" denote channel-check detecting circuits (referred to as "CC signal detecting circuit" in Fig. 1) which detect a channel check signal included in a transmission signal from an opposing multiplex transmission apparatus side. The channel-check detecting circuit 21 is provided in each of the signal process channels 4a which is the voice signal processing system, and the channel-check detecting circuit 22 is provided in each of the signal process channels 4b which is the facsimile signal processing system. Reference numeral "23" denotes a channel check processing circuit (referred to as "CC processing circuit" in Fig. 1) which commands the channel-check signal generating circuits 19 and 20 to generate a channel check signal, and also performs necessary control based on the detection results from the channel-check signal detecting circuits 21 and 22. In Fig. 1, those portions which are given the same reference characters as given in Fig. 5 indicate that they are identical or equivalent to the portions in Fig. 5.

A description will now be given of signal transmission and the channel checking operation of the multiplex transmission apparatus according to the first embodiment. Transmission of a voice signal, a facsimile signal and a data modem signal is the same as that of the conventional multiplex transmission apparatus which has been explained based on Fig. 5, wherein signals undergone voice encoding or facsimile demodulation in the individual signal process channels 4a and 4b are assembled into short cells, stored in a cell of asynchronous transmission in an ATM interface section 13 to be multiplexed and are transmitted to the opposing multiplex transmission apparatus side. On the other hand, a signal which is transmitted from the opposing multiplex transmission apparatus side is subjected to decellularization to disassemble an asynchronous transmission cell into short cells in the ATM interface section 13, and then subjected to short cell disassembling in the individual signal process channels 4a and 4b to acquire a voice signal (or a data modem signal) and a facsimile signal, wherein the voice signal and data modem signal are decoded and the facsimile signal is modulated and thereafter they are output to the exchange interface section 1.

Channel check is carried out for each signal process channel of the signal process channels 4a and 4b and the channel check signal is generated in the channel-check signal generating circuits 19 and 20 in the short-cell assembling circuits 7 and 8. Note that the channel-check signal generating circuits 19 and 20 have only to be arranged in the signal process channels 4a and 4b. In Fig. 1, the reason for the provision of the channel-check signal generating circuits 19 and 20 in the short-cell assembling circuits 7 and 8 is that since the amount of data of the channel check signal and the circuit scale are small, the subordination to the short-cell assembling circuits does not enlarge the circuit scale.

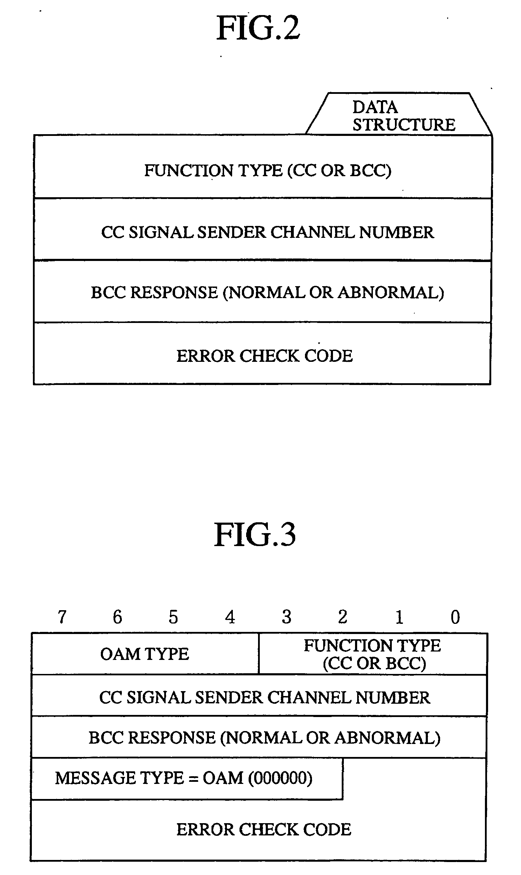

The structure of the channel check signal to be generated will be discussed using Fig. 2. The channel check signal is constructed by providing a function type, a CC signal sender channel number, a BCC response and an error check code from the header side, as shown in Fig. 2. The structural order can be changed as needed and the error check code can be omitted. The function type is provided to recognize it as data about channel check, and either CC or BCC is set as a type. CC is a function type indicating that it is a channel check signal and BCC is a function type indicating that it is a channel check response signal to be transmitted from the opposing multiplex transmission apparatus side with respect to the channel check signal, and it is identified by a code corresponding to CC or BCC. The CC signal sender channel number is the code of the signal process channel to which the channel-check signal generating circuit that has generated the channel check signal belongs. To specify the signal process channel, each of the signal process channels 4a and 4b is identified by a peculiar code given thereto. The BCC response indicates whether or not the channel check signal has been received properly on the opposing multiplex transmission apparatus side and has a binary value, namely normal or abnormal, to be stored. The error check code is provided to detect if the channel check signal has been received accurately in the opposing multiplex transmission apparatus; and for example, data, such as a CRC (Cyclic Redundancy Check) code is set and stored.

While the channel check signal should have a basic structure as shown in Fig. 2, it may be constructed as follows in accordance with a specific transmission system. That is, the channel check signal is defined in an OAM short cell that is defined in the ITU-T Recommendation I. 363.2. Fig. 3 defines a channel check signal in an OAM short cell. This short cell is formed by plural data rows consisting of 0 to 7 bits. First, a category by a name such as failure management is set in the OAM type and an identification code (e.g., 0001 or the like) is stored. A short cell which has this identification code belongs to the category of failure management. Next, a code to distinguish CC or BCC is stored in the function type, as in the one that has been explained referring to Fig. 2. Further, the CC signal sender channel number and BCC response are stored and a specific value indicating an OAM short cell is stored as a message type and the error check code is stored. The CC signal sender channel number, BCC response and error check code are the same as those explained referring to Fig. 2.

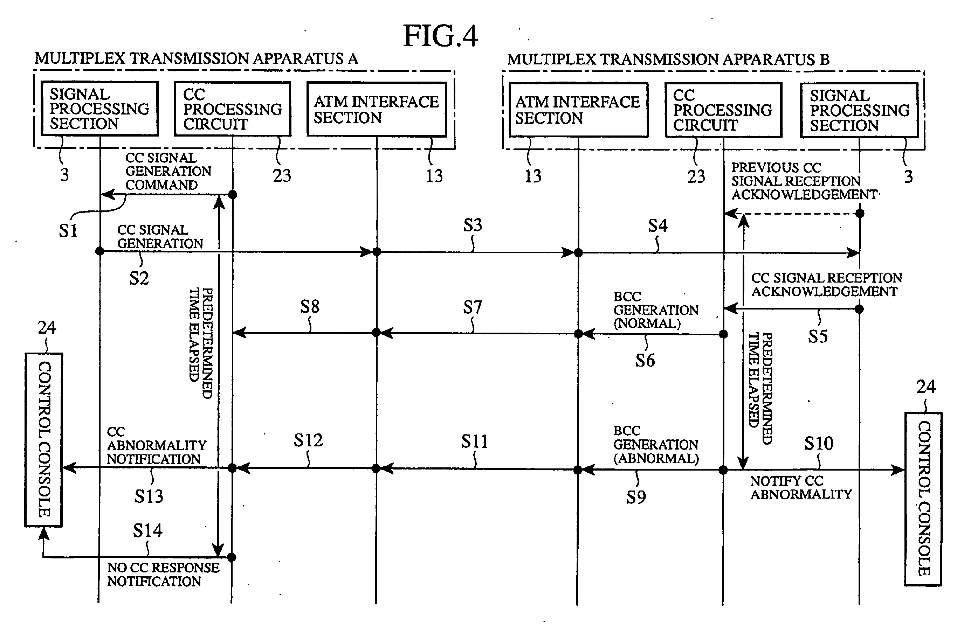

A process of conducting channel check with the channel check signal having that structure will be explained referring to Fig. 4.

First, in step S1, the channel check processing circuit 23 in a multiplex transmission apparatus A outputs a channel check signal generation command to one of the signal process channels 4a and 4b which is to be subjected to channel check. The term "channel check" in Fig. 4 is referred to as "CC". The signal process channel in the signal processing section 3 which has received the channel check signal generation command generates a channel check signal with the above-described structure as a short cell and outputs the signal to the ATM interface section 13 in step S2. In step S3, the ATM interface section 13 stores the input channel check signal in a cell of asynchronous transmission and transmits it to an opposing multiplex transmission apparatus side B.

The processing in the multiplex transmission apparatus B will be discussed next. The ATM interface section 13 in the multiplex transmission apparatus B disassembles the received asynchronous transmission cell in step S4, and then outputs a short cell comprised of the channel check signal to the signal processing section 3. In the signal processing section 3, the short cell is inputted to the signal process channel 4a or 4b, the short cell is disassembled in the short-cell disassembling circuits 9 or 10 in the signal process channels and the channel check signal is detected by the channel-check signal detecting circuits 21 or 22. In a case where the channel check signal has been detected by the channel-check signal detecting circuits 21 or 22, the signal processing section 3 outputs a channel check signal reception acknowledgment to the channel check processing circuit 23 in step S5. The channel check processing circuit 23 which has received this channel check signal reception acknowledgment generates a BCC response (normal) signal as shown in Fig. 2 or Fig. 3 and outputs it to the ATM interface section 13 in step S6. In step S7, the ATM interface section 13 stores the BCC response (normal) signal in an asynchronous transmission cell and transmits it to the multiplex transmission apparatus A side.

In the multiplex transmission apparatus A, when the BCC response (normal) signal from the multiplex transmission apparatus B has been received, the ATM interface section 13 dissembles an asynchronous transmission cell into short cells and outputs the short cell of the BCC response (normal) signal to the channel check processing circuit 23 in step S8. The channel check processing circuit 23 confirms that the BCC response transmitted from the multiplex transmission apparatus B side is normal and goes to the top of the next channel check process (step S1) without performing a process at the time of abnormality.

On the other hand, in a case where the signal processing section 3 in the multiplex transmission apparatus B cannot detect the channel check signal, the channel check processing circuit 23 in the multiplex transmission apparatus B generates a BCC response (abnormal) signal and outputs it to the ATM interface section 13 in step S9 when a predetermined time has elapsed since the previous channel check signal reception acknowledgment. Further, the channel check processing circuit 23 outputs a channel check abnormal notification to a control console 24 in step S10. The control console 24 is a man-machine interface for the operator of the apparatus to monitor the apparatus using a monitor screen, a keyboard and the like, and the channel check abnormal notification displayed there can inform the operator of the occurrence of a channel abnormality. The BCC response (abnormal) signal input to the ATM interface section 13 in step S9 is transmitted to the multiplex transmission apparatus A in step S11. In the multiplex transmission apparatus A, upon reception of the BCC response (abnormal) signal from the multiplex transmission apparatus B, the ATM interface section 13 disassembles an asynchronous transmission cell into short cells and outputs the short cell of the BCC response (abnormal) signal to the channel check processing circuit 23 in step S12. The channel check processing circuit 23 confirms that the BCC response transmitted from the multiplex transmission apparatus B side is abnormal, and outputs a channel check abnormal notification to the control console 24 as a process at the time of abnormality in step S13. As the process at the time of abnormality, the signal process channel where abnormality has occurred may be automatically disabled to inhibit later signals from the exchange interface section 1 from being input to that signal process channel.

Further, in a case where the BCC response signal has not been received after a predetermined time has elapsed, even though the channel check signal had been transmitted to the multiplex transmission apparatus B in step S3, the channel check processing circuit 23 in the multiplex transmission apparatus A outputs a no channel check signal response to the control console 24 in step S14.

The foregoing description has been explained as to the case where the multiplex transmission apparatus A generates a channel check signal and transmits it to the multiplex transmission apparatus B side which generates its response signal and returns it to the multiplex transmission apparatus A side. Because the multiplex transmission apparatus A and the multiplex transmission apparatus B have the same apparatus structure, the multiplex transmission apparatus B can generate a channel check signal and transmit it to the multiplex transmission apparatus A side which can generate its response signal and returns it to the multiplex transmission apparatus B side.

## Claims

1. A multiplex transmission method, comprising the steps of:
disassembling a voice signal and a facsimile signal of plural channels input from an exchange side per each channel;
causing a plurality of signal process channels to perform voice encoding process on a voice signal, and to perform demodulation process on a facsimile signal for each of the signals disassembled per each channel; and
multiplexing and transmitting said processed signals from one multiplex transmission apparatus to an opposing multiplex transmission apparatus side with the method of an asynchronous transfer mode,
wherein a channel check signal is generated in the signal process channels, and the thus generated channel check signal is provided in a cell of asynchronous transmission so as to be transmitted to said opposing multiplex transmission apparatus side.

2. The multiplex transmission method according to claim 1, wherein when the channel check signal is received on said opposing multiplex transmission apparatus side, a channel check response signal is provided in a cell of asynchronous transmission and is transmitted to said one multiplex transmission apparatus.

3. A multiplex transmission apparatus, comprising:
an exchange interface section which disassembles a voice signal and a facsimile signal of plural channels inputted from an exchange side per each channel;
a signal processing section having a plurality of signal process channels, to which signals disassembled by the exchange interface section per each channel are input, and which performs voice encoding process on a voice signal and performs facsimile demodulation process on a facsimile signal; and
an ATM interface section which multiplexes and transmits signals, which have been processed in said signal processing section, to an opposing multiplex transmission apparatus side with the method of an asynchronous transfer mode,
wherein the signal process channels in the signal processing section have channel-check signal generating circuits which generate a channel check signal.

4. The multiplex transmission apparatus according to claim 3, wherein the channel-check signal generating circuit generates the channel check signal as a short cell in asynchronous transmission.

5. The multiplex transmission apparatus according to claim 3, wherein the channel check signal generated by the channel-check signal generating circuit is comprised of a code that represents said generated signal as a channel check signal and a code that represents the signal process channel to which the channel-check signal generating circuit belongs.

6. A multiplex transmission apparatus, comprising:
an ATM interface section which receives a channel check signal transmitted from an opposing multiplex transmission apparatus side in an asynchronous transfer mode;
a channel-check signal detecting circuit which detects the channel check signal received by said ATM interface section; and
a channel check processing circuit which generates a channel check response signal based on acknowledgement of reception of the channel check signal from said channel-check signal detecting circuit,
wherein the channel check response signal generated by the channel check processing circuit is transmitted to the opposing multiplex transmission apparatus side from the ATM interface section in the asynchronous transfer mode.
